# EUROPÄISCHE PATENTSCHRIFT

(11) **EP 2 292 127 B1**
(45) Veröffentlichungstag und Bekanntmachung des Hinweises auf die Patenterteilung: **17.04.2013**
(21) Anmeldenummer: 10173773.2
(22) Anmeldetag: 24.08.2010
(51) Int. Cl.: A47J 31/44, A47J 31/46

(54) **Kaffeeautomat mit bewegbarem Brühgetränkeauslass**
Coffee machine with mobile brewed drink outlet
Automate à café avec ouverture de boisson chaude mobile

(30) Priorität: 08.09.2009 DE 102009029262
(43) Veröffentlichungstag der Anmeldung: 09.03.2011
(73) Patentinhaber: BSH Bosch und Siemens Hausgeräte GmbH, 81739 München (DE)
(72) Erfinder: Kramer, Siegmund, 83417 Kirchanschöring (DE); Meyer, Brigitte, 83339 Chieming (DE)

(56) Entgegenhaltungen:
- WO-A1-2004/023949
- WO-A1-2006/053456
- WO-A2-2009/130661
- DE-B3-102006 043 903

## Beschreibung

Die Erfindung betrifft einen Kaffeeautomaten mit einem Gehäuse und einem an einer einem Benutzer zugewandten Frontseite des Gehäuses angeordneten, zwischen Betriebspositionen bewegbaren Brühgetränkeauslass.

Brühgetränkeauslässe dienen der kontrollierten Abgabe von durch den Automaten produzierten Kaffee- bzw. anderen Heiß- und/oder Kaltgetränken in ein Trinkgefäß, zum Beispiel eine Kaffeetasse. Im Folgenden soll der Einfachheit halber stets von Kaffee die Rede sein, wobei hierunter alle Getränke gezählt werden, die ganz oder teilweise durch den Kaffee-, Kaffeevoll- bzw. Heißgetränkeautomaten hergestellt oder aufbereitet werden, wie beispielsweise Kaffee, Tee, heiße Milch, Milchschaum oder Mischgetränke hieraus. Ebenso wird pauschal der Begriff Kaffeetasse für alle Arten von Aufnahmegefäßen verwendet, die am Kaffeeautomaten befüllt werden können. Als Betriebspositionen des Brühgetränkeauslasses sind diejenigen Positionen zu verstehen, in denen er ein Getränk bestimmungsgemäß in eine Kaffeetasse abgeben kann.

Brühgetränkeauslässe von Kaffeeautomaten sind häufig bewegbar ausgebildet. Denn Kaffeetassen - je nach gewünschter Kaffeeart wie beispielsweise Espresso oder Latte Macchiato - können sich in ihrer Größe stark voneinander unterscheiden. Daher wird der Brühgetränkeauslass der Größe der jeweiligen Kaffeetasse entsprechend positioniert. Die DE 10 2006 043 903 B3 beschreibt einen Brühgetränkeauslass, der horizontal zwischen Betriebspositionen bewegbar ist. Ein Nutzer kann den Brühgetränkeauslass von einer ersten Betriebsposition über einer ersten Abstellfläche - beispielsweise für herkömmliche Kaffeetassen - und einer zweiten Betriebsposition über einer zweiten, tiefer liegenden Abstellfläche - beispielsweise für hohe Gläser, etwa für Latte Macchiato - hin- und herschwenken. Es sind auch vertikal verschiebbare Auslässe bekannt.

W02009130661 offenbart eine Kaffeemaschine mit einer ersten und einer zweiten Einheit, wobei die erste Einheit zur Herstellung eines ersten Getränks, insbesondere eines Kaffees und die zweite Einheit zur Herstellung eines zweiten Getränks, insbesondere eines Cappuccios ausgebildet ist. Ein zentral angeordneter Kaffeeauslass kann von einer ersten Auslassposition, beispielsweise in Richtung einer Kaffeetasse in eine zweite Auslassposition, beispielsweise in Richtung einer Cappucciontasse bewegt werden.

Ein Benutzer muss also neben der Bedienung von Bedienelementen des Kaffeeautomaten auch die Stellung des Brühgetränkeauslasses berücksichtigen. Dabei kann beispielsweise bei einem vertikal verschiebbaren Brühgetränkeauslass die Höhe des Auslasses für eine verwendete Kaffeetasse versehentlich zu hoch eingestellt sein, so dass der Kaffee aus großer Höhe in die Tasse gelangt und verspritzt. Bei einem horizontal verstellbaren Auslass kann der Kaffee versehentlich nicht in die Tasse, sondern auf die Abstellfläche abgegeben werden, weil die Tasse irrtümlich auf der anderen Abstellfläche abgestellt wurde.

Davon ausgehend, ist es Aufgabe der Erfindung, einen verbesserten Kaffeeautomaten bereitzustellen, der einen höheren Komfort bei der Bedienung des Brühgetränkeauslasses aufweist und bei dem Fehlbedienungen ausgeschlossen sind.

Diese Aufgabe wird bei dem eingangs genannten Kaffeeautomaten durch einen mit dem Brühgetränkeauslass gekoppelten Aktuator gelöst, durch den der Brühgetränkeauslass in Abhängigkeit von einem Steuersignal von einer ersten Betriebsposition in mindestens eine zweite Betriebsposition verstellbar ist. Der Aktuator verbringt also den Brühgetränkeauslass bei Bedarf, der durch ein Steuersignal angezeigt wird, selbsttätig von einer ersten Betriebsposition zumindest in eine zweite, ohne dass der Benutzer dafür tätig werden müsste. Die Erfindung wendet sich also ab von dem Erfordernis einer manuellen Verstellung des Brühgetränkeauslasses. Sie verfolgt vielmehr das Prinzip, dass nicht mehr der Benutzer des Kaffeeautomaten die Bewegung des Brühgetränkeauslasses vornehmen muss, sondern der Kaffeeautomat ihm diesen Bedienungsschritt abnimmt. Dabei kann der Aktuator den Auslass nicht nur in zwei, sondern gegebenenfalls in eine Vielzahl von Betriebspositionen befördern.

Der Aktuator kann die Positionen des Brühgetränkeauslasses sowohl schrittweise als auch stufenlos verstellen. Er dient in allen Fällen der automatischen Bewegbarkeit des Auslasses, wodurch einem Benutzer das unter Umständen fehleranfällige eigenständige Verstellen des Auslasses erspart wird. Eine derartige Konstruktion erhöht daher Komfort und Wertigkeit eines Kaffeeautomaten erheblich. Denn die Entwicklung geht dahin, Bedienhandgriffe eines Benutzers zu reduzieren, um den Bedienkomfort zu maximieren. Die Erfindung schließt hier also eine entscheidende Lücke hinsichtlich der Betätigung eines bewegbaren Brühgetränkeauslasses, so dass ein Benutzer letztlich nur noch seine Kaffeetasse geeignet aufstellen und das gewünschte Getränk wählen muss. Schon damit kann die bedarfsgemäße Stellung des Brühgetränkeauslasses bestimmt sein.

Nach einer vorteilhaften Ausgestaltung des Kaffeeautomaten erfolgt die Steuerung des Aktuators in Abhängigkeit von einer gewählten Zubereitungsfunktion des Kaffeeautomaten. Der Benutzer wählt dazu beispielsweise per Tastendruck seinen Getränkewunsch am Automaten aus, der daraufhin das wunschgemäße Getränk zubereitet. Die Steuerung, in der das Steuersignal von der Zubereitungsfunktion abgeleitet wird, garantiert, dass der Aktuator den Brühgetränkeauslass immer in der für die gewählte Zubereitungsfunktion korrekten Betriebsposition bewegt. Dadurch können Bedienungsfehler sehr effektiv vermieden werden, da der Brühgetränkeauslass automatisch und ohne weiteres Zutun eines Benutzers in Abhängigkeit seines Zubereitungswunsches korrekt positioniert wird.

Der erfindungsgemäße Kaffeeautomat kann außerdem über eine oder mehrere Erkennungsvorrichtungen zur Erkennung der Betriebspositionen des Brühgetränkeauslasses verfügen. So kann erreicht werden, dass der Kaffeeautomat auf Basis eines Signals der Erkennungsvorrichtung abgleicht, ob eine Bewegung des Brühgetränkeauslasses durch den Aktuator notwendig ist oder er nach einem vorhergehenden Zubereitungsvorgang schon seine korrekte Position eingenommen hat. Im ersten Fall wird ein Steuersignal zur Aktivierung des Aktuators abgeleitet, im letzten Fall wird ein solches Steuersignal unterdrückt.

Alternativ oder ergänzend hierzu kann nach einer weiteren vorteilhaften Ausgestaltung der Erfindung eine Steuerung des Aktuators in Abhängigkeit von einem Standort und/oder einem Größenmaß einer Kaffeetasse auf einer Abstellfläche des Kaffeeautomaten vorgesehen sein. Das Steuersignal basiert dabei vorzugsweise auf einer Erkennung durch eine weitere Erkennungsvorrichtung in Form einer Tassengrößen- und/oder - positionserkennung. Bei mehreren Aufstellmöglichkeiten für Tassen kann die Erkennungsvorrichtung den aktuellen Standort einer Tasse feststellen und die Position des Brühgetränkeauslasses entsprechend steuern. Zusätzlich oder alternativ kann die Höhe des benutzten Trinkgefäßes detektiert werden, um eine Kollision des Brühgetränkeauslasses mit dem Trinkgefäß zu vermeiden. Damit wird sichergestellt, dass die Position des Brühgetränkeauslasses optimal auf die Kaffeetasse eingestellt ist. Auch diese Steuerung bzw. Erkennung verhindert mögliche Bedienfehler, die bei einer manuellen oder halbautomatischen Bewegung des Brühgetränkeauslasses auftreten können. Sie ist zudem sehr praktisch und vermittelt einen besonderen Eindruck der Wertigkeit des Kaffeeautomaten zusätzlich zum erhöhten Bedienkomfort.

Nach einer weiteren vorteilhaften Ausgestaltungsform der Erfindung kann eine Steuerung des Aktuators in Abhängigkeit von einer separaten Benutzereingabe als Steuersignal, beispielsweise einer Befehlseingabe durch Tastendruck, erfolgen. Diese Steuerung des Aktuators kann alternativ oder ergänzend zu der vorgenannten Steuerung in Abhängigkeit seines Zubereitungswunsches vorgesehen sein. Der Benutzer kann damit aktiv eine bestimmte Betriebsposition des Brühgetränkeauslasses wählen, beispielsweise, weil er nur eine größere Kaffeetasse vorrätig hat als diejenige, die eigentlich für eine Zubereitungsfunktion vorgesehen wäre. Er kann dann mit einem Benutzerbefehl die Betriebsposition des Brühgetränkeauslasses selbst definieren und den Aktuator direkt bzw. separat und unabhängig von einer gewählten Zubereitungsfunktion aktivieren.

Erfindungsgemäß ist der Brühgetränkeauslass zwischen Betriebspositionen horizontal und vertikal bewegbar. Der erfindungsgemäße Aktuator ist insbesondere bei Kaffeeautomaten mit einer horizontalen Bewegbarkeit des Brühgetränkeauslasses zwischen den Betriebspositionen von Vorteil. Denn dort sind den unterschiedlichen Betriebspositionen des Brühgetränkeauslasses auch unterschiedliche Aufstellorte für die zu befüllende Kaffeetasse zugeordnet. Bei einer Fehlbedienung würde der Kaffee verschüttet. Der erfindungsgemäße Aktuator bewegt den Brühgetränkeauslass über die korrekte Aufstellfläche, wodurch auch gleichzeitig angezeigt werden kann, wo eine Kaffeetasse abgestellt werden soll, um als nächste befüllt zu werden. Neben der reinen Bewegungsfunktion erfüllt der Aktuator also auch eine Art Anzeigefunktion für einen Benutzer. Die Bewegung des Brühgetränkeauslasses in eine bestimmte Betriebsposition zeigt dem Benutzer bei einer vertikalen Bewegung an, welche Tassengröße zu verwenden ist. Bei einer horizontalen Bewegung signalisiert sie, wohin eine Tasse zu stellen ist. Eine solche Anzeige ist also auch bei einem vertikal verstellbaren Brühgetränkeauslass von Vorteil, weil das Kaffeegetränk bei einer Fehlbedienung verspritzen könnte. Die Vorzüge der Erfindung kommen jedoch bei horizontal bewegbaren Brühgetränkeauslässen noch deutlich besser zur Geltung, weil dort das Kaffeegetränk vollständig verschüttet würde.

Die horizontalen Bewegbarkeit des Brühgetränkeauslasses kann durch verschiedene Kinematiken umgesetzt werden. Der Auslass kann horizontal verschiebbar sein, zum Beispiel auf einer horizontal verlaufenden Schiene. Diese Konstruktion erfordert einen geringen Platzbedarf für die Bewegung des Brühgetränkeauslasses. Alternativ dazu kann der Auslass an den Gelenken eines Parallellenkers montiert sein. Schließlich kann der Auslass um eine horizontale Achse beispielsweise um etwa 90 bis 180 Grad verdrehbar angeordnet sein. Diese Konstruktionsmöglichkeit erlaubt mindestens zwei sinnvolle Betriebspositionen.

Besonders bevorzugt ist der Brühgetränkeauslass um eine vertikale Achse schwenkbar. Der Auslass kann also zwischen mehr als zwei Betriebspositionen hin- und hergeklappt werden. Diese Variante erfordert den technisch geringsten Aufwand und hat sich bereits in der Ausführung ohne Aktuator zur Durchführung der horizontalen Bewegung als besonders stabil herausgestellt. Zudem ist es sehr einfach, einen horizontal um eine vertikale Achse verschwenkbaren Brühgetränkeauslass mittels eines Aktuators zu bewegen. Es genügt hierzu eine Drehbewegung des Aktuators, wie sie von den meisten Aktuatoren ohnehin auch ohne Richtungsumwandlung bereitgestellt wird.

Nach einer weiteren vorteilhaften Ausgestaltungsform weist der erfindungsgemäße Kaffeeautomat einen motorischen, bevorzugt einen elektromotorischen Aktuator auf. Ein Elektromotor ist ohne größeren Zusatzaufwand im Kaffeeautomaten zu betreiben, da die elektrische Versorgung hierfür ohnehin bereits vorhanden ist. Elektrische Motoren sind für diesen Anwendungsbereich gut geeignet, weil sie präzise und kontrolliert steuerbar sind. Sie können mit einer Abschaltung kombiniert werden, falls sich ihnen ein bestimmter Widerstand entgegenstellt, und so einer Beschädigung des Kaffeeautomaten oder der Verletzung des Benutzers vorbeugen.

Nach einer alternativen Ausgestaltungsform der Erfindung weist der Kaffeeautomat einen federbasierten Aktuator auf. Eine oder mehrere Federn als Aktuator(en) können beispielsweise manuell vorgespannt und mittels eines Einrastmechanismus unter Spannung gehalten werden bis sie freigegeben werden. Statt einer manuellen Vorspannung kann auch eine motorische erfolgen. Der Vorteil eines Federmechanismus liegt vor allem darin, dass er keinen Strom verbraucht. Zudem erfordert sein Einbau in der Regel nur einen geringen Platzbedarf. Die durch die Federkraft hervorgerufene Bewegung kann durch geeignete Dämpfungselemente zusätzlich eingestellt werden, so dass eine ebenfalls gut kontrollierte Bewegung erzielt werden kann.

Nach einer weiteren alternativen Ausgestaltungsform der Erfindung kann der Aktuator ein Bimetallelement umfassen, beispielsweise ein Bimetalldraht oder -blech. Unter Bimetallelementen werden auch solche Elemente aus Materialkombinationen verstanden, die nicht oder nur teilweise metallisch sind, bei denen aber der Bimetalleffekt auftritt. Er äußert sich in einer Veränderung der Form eines Bauteils, das aus zwei Schichten unterschiedlicher Materialien mit unterschiedlichem Wärmeausdehnungskoeffizient besteht, die miteinander stoff- oder formschlüssig verbunden sind. Eine Erwärmung kann mit geringem technischem Aufwand durch einen Stromdurchfluss eines leitenden Bimetallelements erzielt werden. Ein darauf beruhender Aktuator dürfte die geringsten Patzanforderungen haben.

Ein Bimetallelement kann den Aktuator selbst bilden oder auch als Teil des Aktuators beispielsweise dazu dienen, eine Feder vorzuspannen oder zu ver- und/oder zu entrasten. Als elektrisch betriebener Aktuator ist er einfach ansteuerbar und gut kontrollierbar.

Das Prinzip der Erfindung wird im Folgenden anhand einer Zeichnung beispielshalber noch näher erläutert. Es zeigen:
- Figur 1: eine räumliche Ansicht eines erfindungsgemäßen Kaffeeautomaten gemäß einer ersten Ausführungsform,
- Figur 2: eine zweite Ausführungsform eines Kaffeeautomaten.

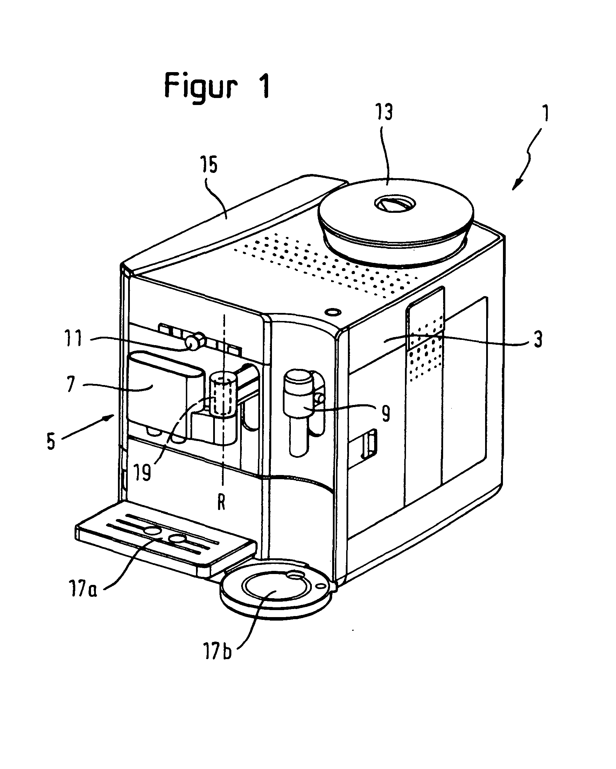

Figur 1 zeigt einen erfindungsgemäßen Kaffeevollautomaten 1 gemäß einer ersten Ausführungsform, dessen Gehäuse 3 eine Frontseite 5, einen oberseitig eingebetteten Bohnenbehälter 13, ein seitlich danebenliegendes Wasserreservoir 15 sowie ein Bedienelement 11 umfasst. In der Frontseite 5 sind eine Milchschaumdüse 9 und ein Brühgetränkeauslass 7 angebracht. Der Brühgetränkeauslass 7 und die Milchschaumdüse 9 befinden sich oberhalb von Abstellflächen 17a, 17b, auf denen im Betrieb Getränkebehälter wie Kaffeetassen oder Latte-Macchiato-Gläser platziert werden.

Der Brühgetränkeauslass 7 ist einerseits so am Gehäuse 3 angebracht, dass er vertikal nach oben oder unten bewegt und seine Höhe damit der Höhe einer darunter zu platzierenden Kaffeeetasse (nicht dargestellt) angepasst werden kann. Andererseits ist der Brühgetränkeauslass 7 um eine Achse R, die parallel zur vertikalen Ausrichtung der Frontseite 5 des Gehäuses 3 liegt, schwenkbar angeordnet. Er kann aus einer ersten Betriebsposition oberhalb der Abstellfläche 17a in eine zweite Betriebsposition oberhalb der Abstellfläche 17b geschwenkt werden, die etwas niedriger angebracht ist als die Abstellfläche 17a. In der ersten Betriebsposition gibt der Brühgetränkeauslass 7 solche Kaffeegetränke aus, die nicht durch Zutaten aus der Kaffeemaschine veredelt werden, beispielsweise Filterkaffee. Durch das horizontale Schwenken des Brühgetränkeauslasses 7 über die Abstellfläche 17b wird der Brühgetränkeauslass 7 in die zweite Betriebsposition angrenzend an die Milchschaumdüse 9 bewegt. In dieser Stellung werden solche Kaffeegetränke ausgegeben, die eine Zutatenkomposition von Kaffee mit Milchschaum vorsehen. Denn wegen der niedriger gelegenen Abstellfläche 17b kann insbesondere ein hohes Latte-Macchiato-Glas unterhalb der Milchschaumdüse 9 abgestellt werden und durch den Brühgetränkeauslass 7 Kaffee sowie durch die Milchschaumdüse 9 Milchschaum zeitgleich oder aufeinander folgend in das Latte-Macchiato-Glas abgegeben werden. Dabei kann der Kaffeevollautomat 1 gemäß vordefinierten Programmen verschiedene Kaffeezubereitungsarten anbieten.

Der Kaffeevollautomat 1 ist zur Bewegung des Brühgetränkeauslasses 7 von der ersten Betriebsposition in die zweite Betriebsposition im Bereich der Aufhängung des Brühgetränkeauslasses 7 am Gehäuse 3 mit einem Aktuator, zum Beispiel in Form eines Elektromotors 19 ausgestattet. Der Elektromotor 19 führt dabei eine Drehbewegung um die Achse R aus. Seine Drehbewegung kann beispielsweise in Abhängigkeit von einer Getränkewahl gesteuert werden, die ein Benutzer mit Hilfe des Bedienelements 11 angibt. Dadurch, dass der Brühgetränkeauslass 7 mithilfe des Elektromotors 19 automatisch in die Betriebsposition geführt wird, in der gemäß der Getränkewahl eine Kaffeetasse stehen sollte, erhält ein Benutzer angezeigt, wohin er seine Tasse zur Befüllung stellen soll. Andere Möglichkeiten der Steuerung des Elektromotors 19 sind die durch eine direkte Anforderung des Benutzers am Bedienelement 11 oder in Abhängigkeit von der Erkennung einer Position einer Kaffeetasse.

Der Elektromotor 19 kann bei geeigneter Positionierung im Kaffeevollautomaten 1 zusätzlich zur horizontalen Bewegung oder alternativ hierzu verwendet werden, den Brühgetränkeauslass 7 nach oben bzw. unten bewegen zu können, um die optimale Auslasshöhe in Bezug auf eine zu befüllende Kaffeetasse zu erzielen. Dies kann beispielsweise - bei einer Kombination von horizontaler und vertikaler Bewegung - durch Verwendung eines geeigneten Getriebes im Gehäuse 3 und/oder im Brühgetränkeauslass 7 realisiert sein. Statt des Elektromotors 19 kann auch ein zweiter Aktuator dazu dienen, die vertikale Verstellbarkeit des Brühgetränkeauslasses 7 zu ermöglichen.

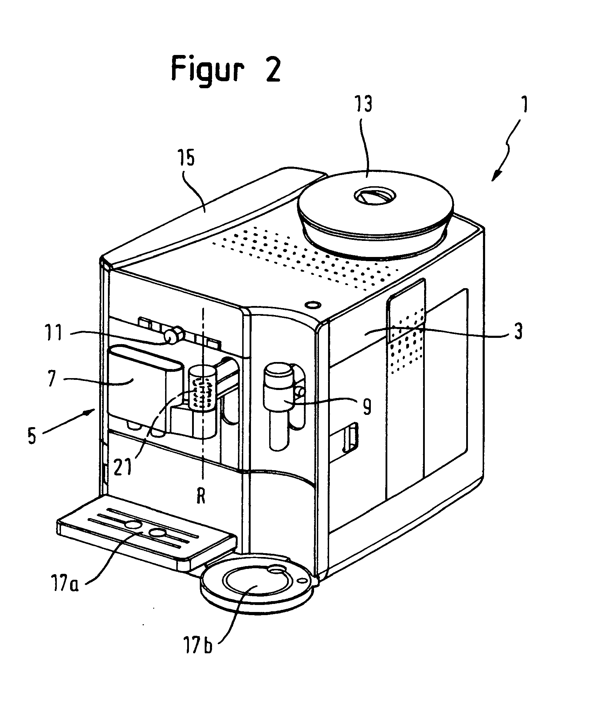

Figur 2 zeigt einen erfindungsgemäßen Kaffeevollautomaten 1 gemäß einer zweiten Ausführungsform. Der Unterschied zur Ausführungsform in Figur 1 besteht darin, dass der Aktuator hier in Form einer Feder 21, nämlich einer Spiralfeder ausgebildet ist. Auch die Feder 21 bewirkt wie der Elektromotor 19 in der vorhergehenden Figur eine Drehbewegung um die Achse R, allerdings naturgemäß nur in eine Richtung, nämlich die von der dargestellten ersten Betriebsposition über der Abstellfläche 17a in die zweite Betriebsposition über der Abstellfläche 17b. In die Gegenrichtung hingegen wird der Brühgetränkeauslass 7 beispielsweise manuell bewegt, wodurch gleichzeitig die Feder 21 wieder vorgespannt und schließlich in einer Endposition, die mit der ersten Betriebsposition korrespondiert, verrastet. Ihre Entrastung bewirkt wiederum die bereits beschriebene Drehbewegung.

Da es sich bei den vorhergehenden, detailliert beschriebenen Figuren um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Brühgetränkeauslausses in anderer Form als in der hier beschriebenen erfolgen. Ebenso kann der Kaffeevollautomat in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 3: Gehäuse
- 5: Frontseite
- 7: Brühgetränkeauslass
- 9: Milchschaumdüse
- 11: Bedienelemente
- 13: Bohnenbehälter
- 15: Wasserreservoir
- 17a, 17b: Abstellflächen
- 19: Motor (Aktuator)
- 21: Feder (Aktuator)

- R: Achse

## Patentansprüche

1. Kaffeeautomat (1) mit einem Gehäuse (3) und einem an einer einem Benutzer zugewandten Frontseite (5) des Gehäuses (3) angeordneten, zwischen Betriebspositionen horizontal und vertikal bewegbaren Brühgetränkeauslass (7), **gekennzeichnet durch** einen mit dem Brühgetränkeauslass (7) gekoppelten Aktuator (19, 21), **durch** den der Brühgetränkeauslass (7) in Abhängigkeit von einem Steuersignal von einer ersten Betriebsposition in mindestens eine zweite Betriebsposition verstellbar ist.

2. Kaffeeautomat gemäß Anspruch 1, **gekennzeichnet durch** eine horizontale Bewegbarkeit des Brühgetränkeauslasses (7) zwischen den Betriebspositionen.

3. Kaffeeautomat gemäß Anspruch 2, **gekennzeichnet durch** einen um eine vertikale Achse (R) verschwenkbaren Brühgetränkeauslass (7).

4. Kaffeeautomat gemäß einem der vorhergehenden Ansprüche, **gekennzeichnet durch** eine Erkennungsvorrichtung zur Erkennung der Betriebspositionen des Brühgetränkeauslasses (7).

5. Kaffeeautomat gemäß einem der vorhergehenden Ansprüche, **gekennzeichnet durch** eine Steuerung des Aktuators (19, 21) in Abhängigkeit von einer gewählten Zubereitungsfunktion des Kaffeeautomaten.

6. Kaffeeautomat gemäß einem der vorhergehenden Ansprüche, **gekennzeichnet durch** eine Steuerung des Aktuators (19, 21) in Abhängigkeit von einem Standort und/oder einem Größenmaß einer Kaffeetasse auf einer Abstellfläche (17a, 17b) des Kaffeeautomaten.

7. Kaffeeautomat gemäß einem der vorhergehenden Ansprüche, **gekennzeichnet durch** eine Steuerung des Aktuators (19, 21) in Abhängigkeit von einer Benutzereingabe.

8. Kaffeeautomat gemäß einem der vorhergehenden Ansprüche, **gekennzeichnet durch** einen motorischen, bevorzugt einen elektromotorischen Aktuator (19).

9. Kaffeeautomat gemäß einem der Ansprüche 1 bis 6, **gekennzeichnet durch** einen federbasierten Aktuator (21).

10. Kaffeeautomat gemäß einem der vorhergehenden Ansprüche, **gekennzeichnet durch** einen Aktuator (19, 21), der ein Bimetallelement umfasst.

## Claims

1. Coffee machine (1) with a housing (3) and a brewed drink outlet (7) which is arranged at a front side (5) of the housing (3) facing a user and which is horizontally and vertically movable between operating positions, **characterised by** an actuator (19, 21), which is coupled with the brewed drink outlet (7) and by which the brewed drink outlet (7) is adjustable from a first operating position into at least one second operating position in dependence on a control signal.

2. Coffee machine according to claim 1, **characterised by** a horizontal mobility of the brewed drink outlet (7) between the operating positions.

3. Coffee machine according to claim 2, **characterised by** a brewed drink outlet (7) pivotable about a vertical axis (R).

4. Coffee machine according to any one of the preceding claims, **characterised by** a recognition device for recognition of the operating positions of the brewed drink outlet (7).

5. Coffee machine according to any one of the preceding claims, **characterised by** a control of the actuator (19, 21) in dependence on a selected preparation function of the coffee machine.

6. Coffee machine according to any one of the preceding claims, **characterised by** a control of the actuator (19, 21) in dependence on a location and/or size of a coffee cup on a set-down surface (17a, 17b) of the coffee machine.

7. Coffee machine according to any one of the preceding claims, **characterised by** a control of the actuator (19, 21) in dependence on a user input.

8. Coffee machine according to any one of the preceding claims, **characterised by** a motorised, preferably an electric-motor-driven, actuator (19).

9. Coffee machine according to any one of the preceding claims, **characterised by** a spring-based actuator (21).

10. Coffee machine according to any one of the preceding claims, **characterised by** an actuator (19, 21) comprising a bimetallic element.

## Revendications

1. Automate à café (1) comportant un carter (3) et une sortie de boisson chaude (7) horizontalement et verticalement mobile entre des positions fonctionnelles, disposée sur une face avant (5) du carter (3) en regard d'un utilisateur, **caractérisé par** un actionneur (19, 21), couplé à la sortie de boisson chaude (7), par le moyen duquel la sortie de boisson chaude (7) peut être déplacée, en fonction d'un signal de commande, d'une première position fonctionnelle vers au moins une seconde position fonctionnelle.

2. Automate à café selon la revendication 1, **caractérisé par** une mobilité horizontale de la sortie de boisson chaude (7) entre les positions fonctionnelles.

3. Automate à café selon la revendication 2, **caractérisé par** une sortie de boisson chaude (7) pivotable autour d'un axe vertical (R).

4. Automate à café selon l'une des revendications précédentes, **caractérisé par** un dispositif de détection pour détecter les positions fonctionnelles de la sortie de boisson chaude (7).

5. Automate à café selon l'une des revendications précédentes, **caractérisé par** une commande de l'actionneur (19, 21) en fonction d'une fonction de préparation sélectionnée de l'automate à café.

6. Automate à café selon l'une des revendications précédentes, **caractérisé par** une commande de l'actionneur (19, 21) en fonction d'un emplacement et/ou d'une taille d'une tasse à café sur une surface de pose de tasses (17a, 17b) de l'automate à café.

7. Automate à café selon l'une des revendications précédentes, **caractérisé par** une commande de l'actionneur (19, 21) en fonction d'une saisie de l'utilisateur.

8. Automate à café selon l'une des revendications précédentes, **caractérisé par** un actionneur (19) motorisé, préférentiellement un actionneur électromotorisé.

9. Automate à café selon l'une quelconque des revendications 1 à 6, **caractérisé par** un actionneur (21) basé sur ressort.

10. Automate à café selon l'une des revendications précédentes, **caractérisé par** un actionneur (19, 21), qui comprend un élément bimétallique.
